Europäisches Patentamt

European Patent Office

Office européen des brevets

(19)

(11) **EP 1 241 470 B1**

(12) **EUROPÄISCHE PATENTSCHRIFT**

(45) Veröffentlichungstag und Bekanntmachung des Hinweises auf die Patenterteilung:
**24.09.2003 Patentblatt 2003/39**

(51) Int Cl.⁷: **G01N 23/201**, G01V 5/00

(21) Anmeldenummer: **01106227.0**

(22) Anmeldetag: **14.03.2001**

(54) **Anordnung zum Messen des Impulsübertragungsspektrums von in einem Untersuchungsbereich für Behältnisse elastisch gestreuten Röntgenquanten**

Apparatus for measuring the pulse transfer of elastically scattered X-ray quanta from an area of a container being inspected

Dispositif de mesure du transfert d'impulsion lors de la diffusion élastique de quantas de rayons x dans la région d' un conteneur à inspecter

(84) Benannte Vertragsstaaten:
**AT BE CH CY DE DK ES FI FR GB GR IE IT LI LU MC NL PT SE TR**

(43) Veröffentlichungstag der Anmeldung:
**18.09.2002 Patentblatt 2002/38**

(73) Patentinhaber: **YXLON International X-Ray GmbH 22419 Hamburg (DE)**

(72) Erfinder: **Harding, Geoffrey, Prof. Dr. 22547 Hamburg (DE)**

(74) Vertreter: **Schnekenbühl, Robert Matthias L. DTS München Patent- und Rechtsanwälte St.-Anna-Strasse 15 80538 München (DE)**

(56) Entgegenhaltungen:
**US-A- 5 008 911**     **US-A- 5 265 144**
**US-A- 5 394 453**     **US-A- 5 600 303**
**US-A- 5 602 893**     **US-A- 6 054 712**

**Beschreibung**

Die Erfindung betrifft eine Anordnung zum Messen des Impulsübertragungsspektrums von in einem Untersuchungsbereich für Behältnisse elastisch gestreuten Röntgenquanten nach dem Oberbegriff des Anspruches 1.

Eine derartige Anordnung ist beispielsweise aus der EP-B1-360 347 bekannt geworden.

Desweiteren sind Gepäckkontrollsysteme vorbekannt, die auf dem Prinzip der Untersuchung mit kohärenten Streustrahlen (Coherent X-Ray Scanning, CXRS) basieren, so z.B. aus der EP-A1-0 556 887. Die Geräte dieser Systeme basieren auf einer Anordnung von Strahlenquelle und Detektor, bei der der Primärstrahl relativ zu den anderen Komponenten fixiert ist. Um ein Behältnis, wie ein Gepäckstück oder dgl. und seinen Inhalt vollständig analysieren zu können, muß in bezug auf das betreffende Teil das gesamte Meßsystem bewegt werden. Die entsprechende Mechanik ist häufig langsam, schwerfällig und kompliziert, so daß Untersuchungszeiten von 60 Sekunden keine Seltenheit sind.

Darüberhinaus wird die Meßzeit von der Leistung der Röntgenquelle beeinflußt. Um eine sichere Aussage über das Vorhandensein im Gepäckstück von Sprengstoff, Drogen, usw. zu treffen, ist es notwendig, dass eine gewisse Anzahl von Streuquanten detektiert werden. Je höher die Leistung der Röntgenröhre, desto kürzer kann die notwendige Meßzeit gehalten werden. Die maximale kontinuierliche Leistung einer Drehanodenröhre liegt bei etwa 10 kW. Dieser Wert stellt ebenso wie die Mechanik eine Begrenzung für die minimale Untersuchungszeit eines Gepäckstücks dar, die bei ca. 1 Minute liegt.

Die Ausgangssignale der Detektorelemente können so verarbeitet werden, wie das insbesondere in der deutschen Patentanmeldung P 41 01 544.4 beschrieben ist. Diese Verarbeitung soll deshalb an dieser Stelle nicht noch einmal im einzelnen erläutert werden. Es sei lediglich erwähnt, daß für jedes Detektorelement ein Verarbeitungskanal vorgesehen ist, in dem das Signal verstärkt, digitalisiert und einem Impulshöhenanalysator zugeführt wird, der die Zahl der Röntgenquanten in den verschiedenen Energiebereichen registriert. Für jedes Detektorelement und für jeden Energiebereich wird diese Zahl durch die Zahl der Röntgenquanten dividiert, die mit Hilfe des zentralen Detektorelements $D_0$ für den betreffenden Energiebereich registriert worden sind. Daraus ergibt sich für jedes Detektorelement das Energiespektrum, und zwar unabhängig von der Energieverteilung der von dem Röntgenstrahler emittierten Röntgenquanten und weitgehend unabhängig von der Schwächung der Streustrahlung durch das Objekt.

Röntgenröhren mit "jump-focus" (aus dem englischen: der Fokus kann hin und her springen = abgelenkt werden) sind in der Literatur hinlänglich bekannt, so z.B. DigiRay®, bei welcher der "inversen Geometrie" der Vorzug gegeben wurde. Diese Form der Anordnung wird deshalb so bezeichnet, weil die traditionellen Funktionen von Röntgenquelle und Detektor (d. h., von Punktdetektor und erweiterter Quelle) in diesem System umgekehrt wurden. Das Zitat "Solomon E G, Wilfley B P, Van Lysel M S, Joseph A W and Heanue J A, 1999, *Scanningbeam digital* x-ray (SBDX) *system for* cardiac *angiography,* Physics of Medical Imaging SPIE Proc. 3659, 246-257 (Eds. J M Boone and J T Dobbins)" bezieht sich auf eine Veröffentlichung der Firma Cardiac Mariners Inc. Dieses Unternehmen nutzt eine Röntgenquelle mit "jump-focus" zur Erstellung von Gefäßabbildungen, vor allem des Herzens. Da Röntgenquellen mit Abtaststrahl oder "jump-focus" in der wissenschaftlichen und technischen Literatur zur "inversen Geometrie" hinlänglich bekannt sind, werden sie hier nicht ausführlicher beschrieben.

Der Erfindung liegt die Aufgabe zugrunde, die eingangs genannte Anordnung derart zu verbessern, daß sie möglichst keinerlei mechanische Bewegung des Röntgenstrahlers erfordert und gleichzeitig eine Verstärkung der Leistung der Röntgenstrahlen erreicht, so daß eine wesentliche Verkürzung der Untersuchungsdauer der Behältnisse im Sekundenbereich, insbesondere für einen Einsatz im Flughafenbereich, möglich wird.

Diese Aufgabe wird durch die eingangs genannte Anordnung gelöst, die dadurch gekennzeichnet ist, daß die Detektoranordnung ($D_1,...D_n$) auf der z-Achse liegt, die zugleich eine Symmetrieachse bildet, um die die Sekundärstrahlblendenanordnung (S) zylindersymmetrisch verläuft, wobei es auf der z Achse einen Punkt O gibt, der den Ursprungspunkt für ein kartesisches Koordinatensystem mit x- und y-Achse festlegt, wobei die Förderachse für das zu untersuchende Behältnis parallel zur z-Achse verläuft, und daß die Primärstrahlblendenanordnung (P) nur Röntgenstrahlen durchläßt, die im wesentlichen den Punkt O treffen, wobei der Röntgenstrahler (Q) hinter der Primärstrahlenblendenanordnung (P) mit einer ausgedehnten Anode angeordnet ist, deren Fokuslage über die Länge der Anode elektronisch steuerbar ist, und wobei die Primärstrahlblendenanordnung (P) und der Röntgenstrahler (Q) zylindersysmmetrisch um die Symmetrieachse oder linear parallel zur y-Achse in der x,y-Ebene verlaufen.

Bei der erfindungsgemäßen CXRS-Anordnung oder Vorrichtung verläuft die Symmetrieachse im Gegensatz zu allen bisher bekannten CXRS-Systemen nicht durch den Fokus der Röntgenröhre bzw. Röntgenstrahler. Insofern beschreibt die vorliegende Erfindung eine neue CXRS-Geometrie auf der Grundlage einer Röntgenröhre mit "jump-focus", die sich gerade dadurch auszeichnet, daß mechanische Abtastbewegungen - abgesehen von der erforderlichen Vorwärtsbewegung auf einem Förderband - beim Untersuchen von Behältnissen jeglicher Art, insbesondere Gepäckstücke und dgl., vermieden werden und eine Röntgenquelle mit einer großen Leistung genutzt werden kann. Darüber hinaus wird es möglich, die Fläche und damit die technische Komplexität des Detektors, der in vorbekannten Systemen ein bedeutender Kostenfaktor ist, wesentlich zu verringern. Eine Kühlung unter Ausnutzung des Peltier-Effekts ist erfindungsgemäß möglich, wodurch die Verwendung von Flüssigstickstoff oder komplexen Kryogeneratoren, wie bei Halbleiterdetektoren aus Germanium, vermieden wird.

Im folgenden wird die Erfindung anhand eines Ausführungsbeispieles zum besseren Verständnis der Erfindung erläutert. Die gemachten Angaben zu Abmessungen sind in mm und alle Winkel in radian. Es dürfte einleuchten, daß die Erfindung nicht auf das gezeigte und beschriebene Ausführungsbeispiel beschränkt ist, sondern sich im geeigneten Rahmen ändern läßt.

Es zeigt:

Fig. 1 auf der linken Hälfte eine perspektivische Darstellung der erfindungsgemäßen CXRS-Anordnung, sowie auf der rechten Seite eine Sicht entlang der Symmetrieachse,

Fig. 2 eine Darstellung einer zweiten erfindungsgemäßen CXRS-Anordnung mit linearer Röntgenröhre,

Fig. 3 eine Darstellung einer weiteren CXRS-Anordnung mit Zeilendetektor zur Gewinnung von Durchleuchtungsbildern,

Tabelle 1 beispielhafte geometrische Parameter für die Hauptkomponenten der erfindungsgemäßen CXRS-Anordnung mit "jump-focus" und

Tabelle 2 Werte für die Koordinate der Detektorelemente, Spalten und für den Radius des Abbildungsschlitzes vom Punkt 0.

Aufgrund der Ringsymmetrie bietet es sich an, die Positionen der Hauptkomponenten unter Angabe ihres Radius von O zu bezeichnen. Folglich nehmen wir für $R_s$ (den Ausgangsradius relativ zu O) einen Wert von 2150 mm usw. an. Andererseits empfiehlt sich aufgrund der Tatsache, daß das Gepäckstück auf einem Förderband transportiert wird, ein rechteckiges kartesisches Koordinatensystem. Folglich geben wir $L_s$ (= 400 mm) als Entfernung von der Röntgenquelle zur Oberseite des Gepäcktunnels in Z-Richtung an, $L_o$ (= 650 mm) ist die Höhe des Gepäcktunnels, und $L_d$ (= 1100 mm) ist der Abstand zwischen Förderband und ZY-Ebene in Z-Richtung.

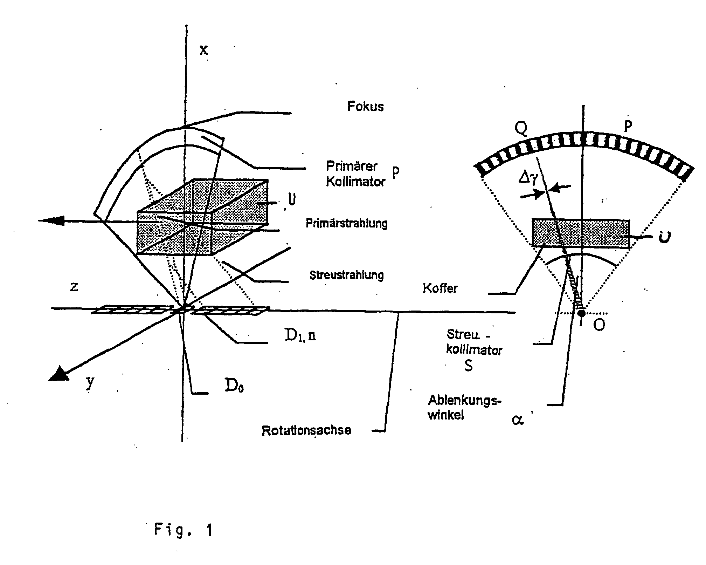

Nach der linken Seite von Figur 1 definiert die Z-Achse eine zylindersymmetrische Geometrie. Die Hauptkomponenten des Systems, d.h. die Röntgenquelle, der Primärkollimator und der Streukollimator sind (zumindest annähernd) drehbar symmetrisch rings um die Z-Achse gelegen. Das zu untersuchende Gepäckstück wird parallel zur Z-Achse auf einem Band (nicht dargestellt) transportiert.

Es wird ein Punkt O definiert, der sich auf der Z-Achse befindet und der den Ursprungspunkt von einem kartesischen Koordinatensystem mit x- und y-Achse bildet. Der innerhalb der XY-Ebene gelegene Bereich ist der des Gepäckdurchleuchtens. In einem Radius $R_s$ von O befindet sich in der Durchleuchtungsebene eine "jump-focus" Röntgenquelle. Sie läßt es zu, dass der Röntgenfokus über einen Kreisbogen mit einem Drehzentrum bei O abgelenkt werden kann. Bei der erfindungsgemäßen Anordnung liegt der maximale Ablenkungswinkel in der XY-Ebene bei ±20°.

Fig. 1 zeigt (gestrichelte Linie) einen Primärstrahl, der von dem Fokuspunkt Q aus das Detektorelement $D_0$ trifft. Es werden zwei weitere Strahlen (gestrichelte Linien) gezeigt, die von den oberen bzw. unteren Seite des Gepäckstückes (schattiert) gestreut werden. Diese Strahlen treffen durch den Streustrahlkollimator nur die Detektorelemente $D_1$ bzw. $D_n$. Der Streustrahlkollimator verbindet Streupunkte im Objektraum mit einem gewissen Radius, R, von der Z Achse mit dem dazugehörigen Detektorelement, I, und zwar unabhängig von der Position, Q, der Röntgenquelle. Der Streustrahlkollimator sorgt auch dafür, dass der Streuwinkel unabhängig vom Index, I, bleibt.

Die Geometrie der CXRS-Vorrichtung mit "jump-focus" kann auf der rechten Seite von Figur 1, die einen XY-Querschnitt durch das System darstellt, besser erkannt werden. Wenn der Elektronenstrahl von der Röntgenröhre entlang der Anode abgelenkt wird, ergibt sich daraus eine bewegliche Röntgenquelle. An einem bestimmten Punkt Q werden Röntgenstrahlen in den gesamten Raum emittiert. Aus Gründen der Symmetrie ist folgendes offensichtlich: Wenn der Primärkollimator und der Streukollimator zylindersymmetrisch um die Z-Achse verlaufend ausgeführt werden, hängt der Streuwinkel nicht von der Position von Q ab. Genau genommen wäre es möglich, den gesamten Anodenbogen zu aktivieren und dabei gleichzeitig das Gepäckstück aus vielen verschiedenen Richtungen zu bestrahlen. Der wichtigste Nachteil dieses Betriebsmodus besteht darin, daß die kohärente Streuung kleiner Prüfstücke, beispielsweise von Plastiksprengstoff, von allen anderen im Gepäckstück befindlichen Materialien, die Strahlen an das Detektorelement abgeben können und innerhalb des Bogens des Primärstrahls liegen, überlagert würde (Partielles-Voxel Problem). Andererseits ist es möglich, an der Anode nur einen einzelnen Punkt (mit variabler Position) zu aktivieren. Das Ergebnis wäre ein Streuungssignal mit einer hohen räumlichen Auflösung, jedoch einer verminderten Intensität. Im allgemeinen ist es ratsam, eine Fokuslänge (entlang des Bogens) zu wählen, die den Abmessungen des kleinsten Objekts entspricht, welches erkannt werden soll. Basierend auf Erfahrungen mit bereits entwickelten Gepäckuntersuchungssytem, die die CXRS-Methode verwenden, ist eine Fokuslänge von etwa 50 mm (definiert durch den Winkelbereich δα), was im Gepäckstück einem "Fußabdruck" von etwa 30 mm entspricht, ein guter Kompromiß. Dabei ist die Position (definiert durch den Winkel α) der Anode des 50-mm-Fokus selbstverständlich im Laufe der Zeit variabel. Die Fokusbreite in der Z Richtung hängt von der erwünschten Auflösung im Impuls-übertragungsspektrum und beträgt üblicherweise 0.2 mm.

Wie oben beschrieben, ist die Position des in Fig. 1 durch den Winkel α dargestellten Brennflecks zeitlich variabel. Wenn der Elektronenstrahl von der Röntgenröhre entlang der Anode abgelenktwird, ergibt sich daraus eine bewegliche Röntgenquelle. Der Fokus hat eine Länge von beispielsweise 50 mm. Im Interesse einer Beibehaltung der Drehsymmetrie wird jedoch ein Primärstrahlkollimator zwischen der "jump-focus" Röntgenquelle und Gepäckstück positioniert. Dadurch werden alle jene Strahlen absorbiert, die sich außerhalb eines kleinen Fächers mit dem öffnungswinkel Δγ befinden. In der Praxis wird ein solcher Kollimator, wie in Figur 1 dargestellt, durch Lamellen mit regelmäßigen Abständen voneinander realisiert (Soller-Spalte), wobei diese Materialien aus einem Material bestehen sollten, das Röntgenstrahlen in relativ starkem Maße absorbiert. Wenn die Lamellen eine Länge von 250 mm haben beträgt der Abstand zwischen benachbarten Lamellen etwa 1 mm. Der dazugehörige Wert des Öffnungswinkels, Δγ, ist 0.4°.

In senkrechter Richtung, d.h. parallel zur Z-Achse, soll die Primärstrahlöffnung bei einer Entfernung von 250 mm von der Quelle eine Breite von 0,2 mm aufweisen.

Die in das Objekt induzierte sekundäre (kohärente) Strahlung wird durch eine lineare Anordnung en-ergieauflösender Detektoren $D_1$, $D_i$ ... $D_n$ angezeigt. Diese können aus Germanium oder Raumtemperatur-halbleitern (beispielsweise Cadmiumzinktellurid) beste-hen und befinden sich in der Y-Z-Ebene an der Z-Achse. Da die Messung von der Schwächung des Primarstrahls im Gepäckstück nützliche Informationen liefert, ist es vorgesehen an dem Punkt O ein Detektorelement $D_0$ zu positionieren, welches die Durchleuchtungsstrahlung anzeigt. Diese Informationen können für Schwächungskorrekturen genutzt werden. Leider ist der Röntgenfokus mit 50-mm Länge zu groß, um in $D_0$ ein Durchleuch-tungsbild des Gepäckstückes mit hoher Auflösung gewinnen zu können.

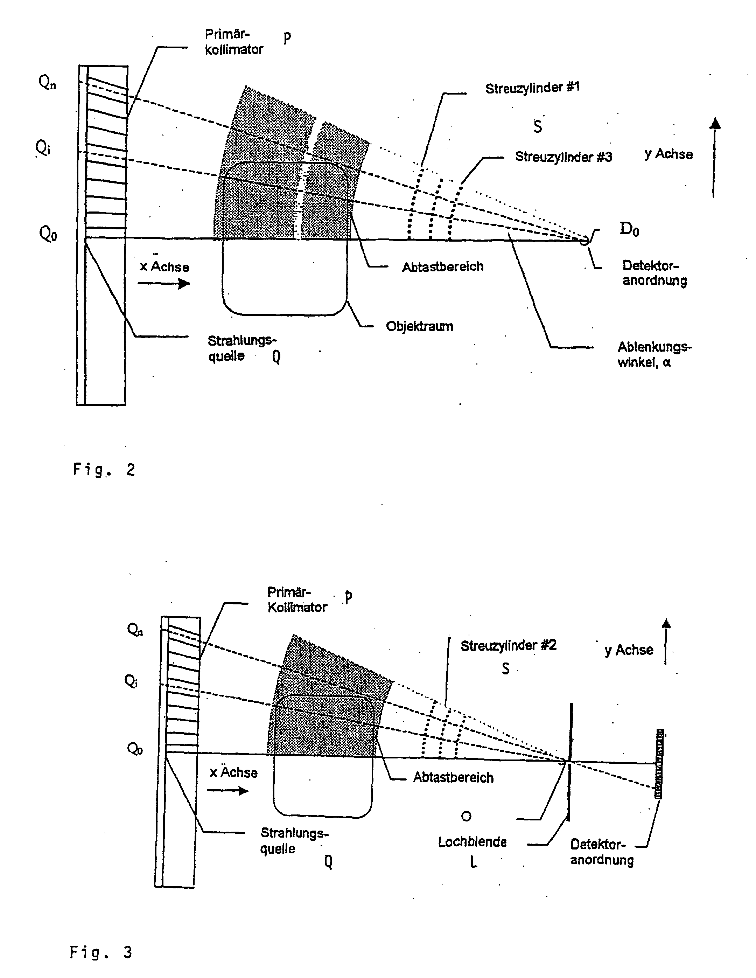

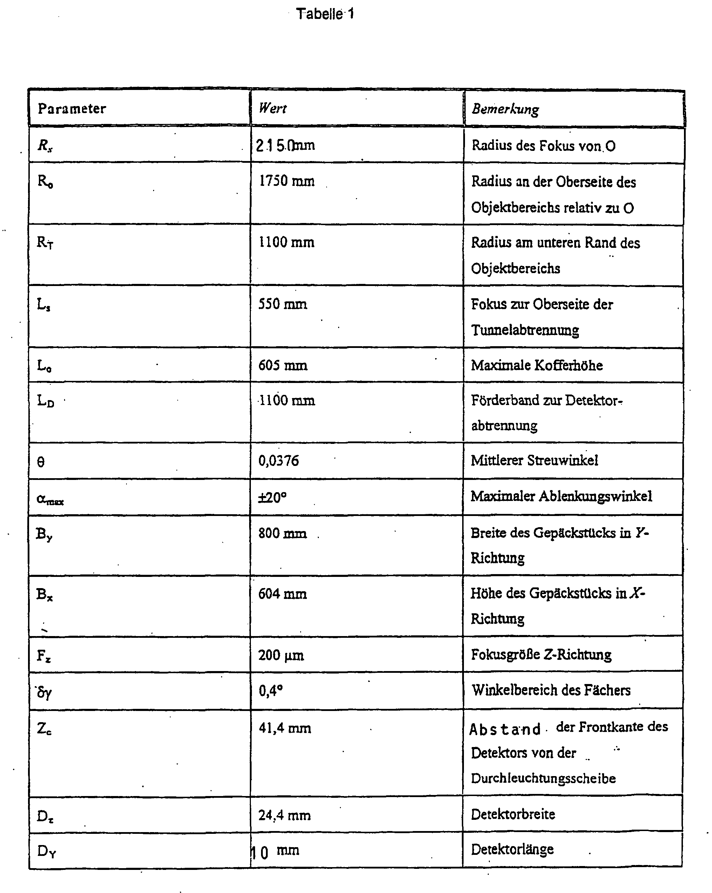

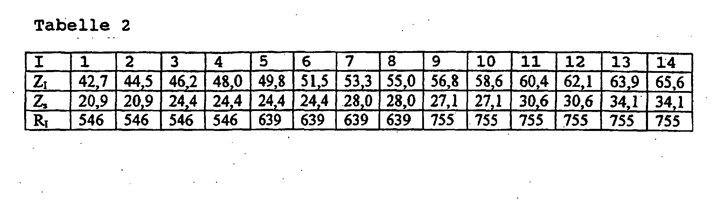

In einer vorteilhaften Weiterbildung des Erfindungsgegenstandes (Figur 3) befindet sich an dem Punkt O eine Blende mit einer Breite in der z-Richtung zwischen 0,02 mm und 0,2 mm. Hinter der Blende befindet sich eine Detektorzeile (Fig.3) die die Durchlaßstrahlung erfaßt und zwar so, daß ein projektionsbild (Durchleuchtungsbild) des Gepäckstückes auf der Detektorzeile entsteht. Geht man von einem Streuungswinkel θ der 0,0376 beträgt, und geht man darüber hinaus davon aus, daß der Objektbereich der Höhe $L_o$ mit parallel verlaufenden Streustrahlen auf den Detektor projiziert wird, läßt sich die Gesamtbreite des Detektors in Z-Richtung nach folgender Gleichung problemlos er-mitteln:

$$D_z = L_o \sin(\theta)$$

Ein repräsentativer Wert für $L_o$ ist 650 mm (sie-he weiter unten). Folglich beträgt dann $D_z$ = 24,4 mm. Ähnlich dem ersten Detektorelement, befindet sich $D_1$ um $L_d \sin(\theta)$ von der *XY*-Ebene versetzt und damit 41,36 mm vom Punkt O entfernt. Eine typische Detektorelementbreite in 2-Richtung beträgt bei einer 50-mm-Auslösung im Objektraum 50 . $\sin(\theta)$ = 1,8 mm. Daraus ist ersichtlich, daß mindestens 14 Detektorelemente (=24,4 mm / 1,8 mm) erforderlich sind.

Die Detektorelemente zeigen das primäre Strahlenbündel durch einen oder mehrere Ringspalte. Es besteht eine eindeutige Beziehung zwischen dem Detektorelementindex i und dem Radius von dem Punkt O des dargestellten Primärstrahlbogens. Darüber hinaus ist auch die Verwendung einer Vielzahl von Spalten möglich, wie in verschiedenen CXRS-Patenten dargestellt, um sicherzustellen, daß der Streuungswinkel θ praktisch konstant ist, und zwar unabhängig vom De-tektorelement. ungeachtet des Quellen-Ablenkungs-winkels α erkennen die Detektoren $D_1$, $D_i$ ... $D_n$. immer die im konstanten Winkel θ außerhalb der X-Y-Ebene gestreuten Strahlen. Diese Bedingung wird dadurch erreicht, daß der Streukollimator ringförmig-symmetrisch um die Z-Achse angeordnet ist.

Bei einem Wert von $L_d$ von 1100 mm sind günstige Bildmerkmale (Objekt auf Detektorstrahlfeld) sichergestellt, da dann gilt: $L_d$ >> $L_o$ Außerdem ist bei die-sem relativ großen Wert für $L_d$ der Streuspaltkollimator leicht in die verfügbare Fläche einzupassen.

Hinsichtlich der geometrischen Anforderungen für das erfindungsgemäße CXRS-System mit "jump-focus" werden verschiedene Abmessungen angenommen, wie sie in Tabelle 1 aufgelistet sind. Diese Abmessungen sind vor allem deshalb zu rechtfertigen, weil sie mit dem Streuwinkel bereits realisierter Systeme korrespondieren und weil ein Koffer mit einer maximalen Breite von 800 mm und einer maximalen Höhe von 605 mm in einem Durchlauf (von -20° ≤ α ≤ 20°) überprüft werden kann.

Die Breite eines bestimmten Detektorelements (d.h. seine Ausdehnung in Z-Richtung) beeinflußt auch den Streuwinkel θ. Diese Variation und die nachfolgend in diesem Abschnitt beschriebenen Variationen sind unter Verwendung einer elementaren Trigonometrie berechnet worden. Eine Detektorbreite von etwa 1,8 mm ist angemessen. Dieser Wert korrespondiert mit einer Voxelhöhe im Koffer von ca. 40 mm bei einem Streuwinkel von 0,0376 Radian.

Der Streuwinkel hängt ab von der Länge der Detektorelemente. Die Auflösungsbedingung wird durch eine Detektorlänge von 10 mm erfüllt.

Um 650 mm Objektfläche auf dem Detektor abbilden zu können (das ist zum Durchleuchten eines Koffers mit einer Höhe von 605 mm erforderlich), muß die Gesamtausdehnung des Detektorstrahlfeldes in Z-Richtung 24,4 mm betragen. Das erste Element des Detektorstrahlfeldes, das für die Abbildung des Kofferquerschnitts unmittelbar über dem Förderband verantwortlich ist, ist um 41,4 mm von der XY-Ebene verschoben. Eine Verdopplung des Streusignals kann dadurch erreicht werden, daß auf jeder Seite der Primärstrahl-Ablenkungsebene ein Detektorstrahlfeld errichtet wird. Die komplette Breite dieser beiden Detektoren mit einer Durchleuchtungsfläche in Z-Richtung beträgt 125 mm.

Wie weiter oben bereits beschrieben, muss der Streukollimator durch Öffnungen realisiert werden, die ringförmig-symmetrisch um die Z-Achse verlaufen.

Da 14 Detektorelemente mit einer Breite von 1,8 mm notwendig sind, um den gesamten Objektraum zu erfassen, wird hier ein Streukollimator beschrieben, mit einer Spalte für je ein Paar von Detektorelementen. Die Detektorelemente haben den Index i ($1 \leq i \leq 14$), wobei i = 1 das Element mit dem geringsten Abstand zur X-Y Ebene darstellt. Tabelle 2 gibt Werte an für die Z Koordinate der Detektorelemente, die Spalten und für den Radius des Abbildungsschlitzes vom Punkt O.

Aus der Tabelle 2 wird deutlich, daß der Streukollimator aus nur 3 Zylindern besteht. Um die notwendige Auflösung im Impulsübetragungsspektrum erreichen zu können, müssen (unter Verwendung der in Tabelle 1 angegebenen Abmessungen) die Spalte des Streukollimators durchschnittlich ca. 0,4 mm breit sein.

Aus den weiter oben gemachten Angaben für den Radius der Röntgenquelle (O = 2100 mm) und den maximalen Ablenkungswinkel (± 20°) ergibt sich, daß die Anode eine Länge von 1600 mm haben muß. Vorausgesetzt dass der Primärkollimator aus Lamellen besteht, die auf den Punkt O ausgerichtet sind, ist es unwesentlich ob die Anode die Geometrie eines Kreisbogens aufweist oder linear ist.

Eine solche Anordnung (nur die Hälfte oberhalb der X Achse ist relevant) ist in Fig. 2. oben abgebildet. Der Streukollimator, der aus drei zylindrischen Blenden besteht, wurde gestrichelt dargestellt in Fig. 2, da die Spalten außerhalb der Schnittebene liegen.

Die lineare Röntgenröhre mit "jump-focus" kann auf kompakte Art und Weise realisiert werden, wenn sie eine Vielzahl von Kathoden besitzt, die einzeln gesteuert werden können. Jede Kathode erzeugt einen Elektronenstrahl von etwa 50 mm Länge, wenn sie aktiv geschaltet wird. Ansonsten wird der Elektronenstrahl durch eine Gitterspannung unterdrückt. Indem die Kathoden sequentiell freigeschaltet werden, entsteht eine Röntgenquelle an die Positionen $Q_0$, $Q_1$ usw. mit einer Verweildauer, die elektronisch gesteuert werden kann. Die gesamte Länge der Anode in der Y Richtung beträgt 1565 mm.

Die wissenschaftliche Literatur beinhaltet bekannte Gleichungen (siehe hierzu A Bouwers, An x-ray tube with a rotating anode, Physica, 10, 125 1930) die die Anodentemperatur, Leistung des Elektronenstrahls und Verweildauer des Strahls auf der Anode in Verhältnis zueinander setzen. Aufgrund solcher Beziehungen läßt sich abschätzen, dass ein Fokus mit Dimensionen von 1 mm x 50 mm bei einer Belastung mit 50 kW über eine Impulszeit von 1000 μs zu einer maximalen Anodentemperatur von 1200 °C führt. Damit die eingebrachte Leistung nicht zum Schmelzen der Anode führt, ist es notwendig, dass die Anode aus einem Material mit einer guten Wärmeleitfähigkeit und mit einer hohen Schmelztemperatur besteht. Wolfram und Gold eignen sich besonders hierfür. Es ist außerdem notwendig, dass die Wärme zügig abgeführt wird, was durch eine Anodenkühlung mit Wasser, Öl usw. gewährleistet werden kann.

Wenn man bedenkt, daß eine projektierte Fokusgröße von ca. 200 μm erforderlich ist, so wird ein Anodenwinkel von 11° benötigt, um einen Fleck mit einer Breite von 200 μm zu projizieren, wenn der Elektronenstrahl eine "reale" Breite von 1 mm hat.

32 Fokuspositionen werden benötigt, um Untersuchungen über die gesamte Länge'einer Röhrenanode von 1600 mm Länge mit einem 50 mm langen Brennfleck durchführen zu können. Bei einer Verweildauer von 1 ms je Fokusposition erfordert die Untersuchung einer Scheibe zur Aufnahme der Daten 32 ms. Alternativ hierzu durchleuchtet das System 30 Scheiben je Sekunde. Da die CXRS-Konfiguration mit "jump-focus" bei der Produktion von Streuphotonen je kW Röhrenleistung ebenso effizient wie bei zuvor realisierten Systemen ist, wird damit eine Gesamt-Prüfdauer von 6 s je Gepäckstück erreicht.

**Patentansprüche**

**1.** Anordnung zum Messen des Impulsübertragungsspektrums von in einem Untersuchungsbereich für Behältnisse elastisch gestreuten Röntgenquanten, mit einem auf der einen Seite des Untersuchungsbereichs (U) angeordneten polychromatischen Röntgenstrahler (Q) und einer auf der anderen Seite des Untersuchungsbereichs befindlichen, die Energie der gestreuten Röntgenquanten messenden Detektoranordnung (D) sowie mit einer Primärstrahlenblendenanordnung (P) und einer Sekundärstrahlblendenanordnung (S), die nur Streustrahlung innerhalb eines bestimmten Streuwinkelbereichs zum Detektor durchläßt, von denen die Primärstrahlenblendenanordnung zwischen dem Untersuchungsbereich und dem Röntgenstrahler (Q) und die Sekundärstrahlblendenanordnung (S) zwischen dem Untersuchungsbereich (U) und der Detektoranordnung (D) angeordnet ist und mit Mittel zur Verarbeitung der gemessenen Signale, **dadurch gekennzeichnet, daß** die Detektoranordnung ($D_1,...D_n$) auf der z-Achse liegt, die zugleich eine Symmetrieachse bildet, um die die Sekundärstrahlblendenanordnung (S) zylindersymmetrisch verläuft, wobei es auf der z Achse einen Punkt O gibt, der den Ursprungspunkt für ein kartesisches Koordinatensystem mit x- und y-Achse festlegt, wobei die Förderachse für das zu untersuchende Behältnis parallel zur z-Achse verläuft, und daß die Primärstrahlblendenanordnung (P) nur Röntgenstrahlen durchläßt, die im wesentlichen den Punkt O treffen, wobei der Röntgenstrahler (Q) hinter der Primärstrahlenblendenanordnung (P) mit einer ausgedehnten Anode angeordnet ist, deren Fokuslage über die Länge der Anode elektronisch steuerbar ist, und wobei die Primärstrahlblendenanordnung (P) und der Röntgenstrahler (Q) zylindersysmmetrisch um die Symmetrieachse oder linear parallel zur y-Achse in der x,y-Ebene verlaufen.

2. Anordnung nach Anspruch 1, **dadurch gekennzeichnet, daß** die Detektoranordnung D aus Elementen $(D_1,...D_n)$ besteht, die die im Untersuchungsbereich enstehende Streustrahlung erfassen, dass zwei Streustrahldetektoranordnungen mit Elementen $D_1,...D_n$ spiegelsymmetrisch um den Punkt O angeordnet sind, dass jede Anordnung mindestens 10 bis zu maximal 50 Elemente pro Seite umfaßt, die aus halbleitendem Material wie Ge, CaZnTe usw. bestehen.

3. Anordnung nach Anspruch 1 bis 2, **dadurch gekennzeichnet, daß** sich an dem Punkt O entweder ein Detektor $D_0$ zur Messung der Durchlaßstrahlung oder eine Blende befindet, durch die die Durchlaßstrahlung auf einer Röntgenstrahlempfindliche Detektorzeile registriert wird, wobei die Detektorzeile aus einer Vielzahl (etwa 512) von Detektorelementen besteht und dass die Detektorzeile parallel zur y-Achse liegt.

4. Anordnung nach Anspruch 2, **dadurch gekennzeichnet, daß** jedes Element der Detektoranordnung D ein Mittel zur Pulshöhenspektrumanalyse aufweist.

5. Anordnung nach Anspruch 1 bis 4, **dadurch gekennzeichnet, daß** jedes Element eine Breite in z-Richtung von 0,5 bis 2 mm und eine Länge in y-Richtung von 5 bis 20 mm aufweist.

6. Anordnung nach Anspruch 1 bis 5, **dadurch gekennzeichnet, daß** die Sekundärstrahlenblendanordnung (S) aus mehreren einander umschließenden zu der Symmetrieachse konzentrisch zylinderförmigen Kollimatorkörpern besteht.

7. Anordnung nach Anspruch 1 bis 6, **dadurch gekennzeichnet, daß** die Primärstrahlblendenanordnung aus mehreren Lamellen aus röntgenstrahlabsorbierendem Material wie Cu besteht, wobei die Lamellen sich in der z-Achse schneiden, eine Strahlendivergenz in der x-y Ebene von 0,2 bis 0,6°, insbesondere 0,4° zulassen, eine Länge in der x-Richtung zwischen 100 und 300 mm und einen maximalen Winkel in der x-y Ebene von der x-Achse von ± 20° haben.

8. Anordnung nach Anspruch 1 bis 7, **dadurch gekennzeichnet, daß** die ausgedehnte Anode eine Länge in der y-Richtung von 1 bis 2 m, insbesondere 1,5 m besitzt, wobei über diese Länge ein Elektronenstrahl ablenkbar oder der Röntgenstrahler mit einer Vielzahl von 30 bis 50 einzelnen Kathoden versehen ist, die nebeneinander angeordnet sind und nach einem Sequenzmuster einschaltbar sind, wobei die Fokuslänge auf der Anode 30 bis 60 mm in der y-Richtung und effektive Fokusbreite in der z-Richtung 0,2 mm beträgt, und daß die Verweilzeit für jede eingeschaltete Fokusposition 200 bis 2000 μsec beträgt.

9. Anordnung nach Anspruch 1 bis 8, **dadurch gekennzeichnet, daß** die aus Wolfram oder Gold bestehende feste Anode mit Kühlmittel wie Wasser oder Oel kühlbar ist.

10. Verwendung der Anordnung nach einem der mehreren der vorstehenden Ansprüche 1 bis 9 zur Untersuchung von Sprengstoff, Waffen oder Drogen enthaltenden Behältnissen, wie Gepäckstücken, Paketen, Taschen und dgl..

**Claims**

1. A system for measuring the pulse transmission spectrum of X-ray quanta that are elastically scattered in an examination region for containers, comprising a polychromatic X-ray source (Q) arranged on one side of the examination region (U) and a detector array (D) that is located on the other side of the examination region and measures the energy of the scattered X-ray quanta, further comprising a primary beam diaphragm arrangement (P) and a secondary beam diaphragm arrangement (S) which lets only scattered radiation within a specific scattering angle range through to the detector; the primary beam diaphragm arrangement being arranged between the examination region and the X-ray source (Q), and the secondary beam diaphragm arrangement (S) being arranged between the examination region (U) and the detector array (D); and comprising means for processing the measured signals, **characterized in that** the detector array $(D_1,...D_n)$ lies on the z-axis, which at the same time forms an axis of symmetry about which the secondary beam diaphragm arrangement (S) extends in a cylindrically symmetric manner; the z axis having a point O which defines the origin for a Cartesian coordinate system with x- and y-axes; the conveying axis for the container to be examined running parallel to the z-axis; and **in that** the primary beam diaphragm arrangement (P) lets pass through only X-rays that essentially hit the point O; the X-ray source (Q) being arranged behind the primary beam diaphragm arrangement (P) with an extended anode whose focus position is electronically controllable along the length of the anode; and primary beam diaphragm arrangement (P) and the X-ray source (Q) extending about the axis of symmetry in a cylindrically symmetric manner or linearly parallel to the y-axis in the x,y-plane.

2. The system as recited in Claim 1, **characterized in that** the detector array D is composed of elements ($D_1,...D_n$) that measure the scattered radiation produced in the examination region, **in that** two scattered beam detector arrays including elements $D_1,...D_n$ are arranged with mirror symmetry around the point O, **in that** each array includes at least 10 to a maximum of 50 elements per side that are composed of semiconducting material such as Ge, CaZnTe, etc.

3. The system as recited in Claims 1 through 2, **characterized in that** at point O, there is located either a detector Do for measuring the radiation passing through, or a diaphragm via which the radiation that passes through is recorded on an X-ray sensitive detector line, the detector line being composed of a plurality (about 512) of detector elements, and **in that** the detector line is parallel to the y-axis.

4. The system as recited in Claim 2, **characterized in that** each element of the detector array D has a means for pulse height spectrum analysis.

5. The system as recited in Claims 1 through 4, **characterized in that** each element has a width in the z-direction of 0.5 to 2 mm and a length in the y-direction of 5 to 20 mm.

6. The system as recited in Claims 1 through 5, **characterized in that** the secondary beam diaphragm arrangement (S) is composed of a plurality of collimator bodies which surround each other and which are concentrically cylindrical with respect to the axis of symmetry.

7. The system as recited in Claims 1 through 6, **characterized in that** the primary beam diaphragm arrangement is composed of a plurality of blades which are made of X-ray absorbing material, such as Cu, which intersect each other in the z-axis, allow a beam divergence in the x-y plane of 0.2 to 0.6°, in particular, 0.4°, and which have a length in the x-direction between 100 and 300 mm and a maximum angle from the x-axis of $\pm$ 20° in the x-y plane.

8. The system as recited in Claims 1 through 7, **characterized in that** the extended anode has a length in the y-direction of 1 to 2 m, in particular 1.5 m, over which length an electrode beam can be deflected or the X-ray source is provided with a plurality of 30 to 50 individual cathodes that are arranged side-by-side and can be activated in a sequential pattern; the focal length on the anode being 30 to 60 mm in the y-direction and the effective focal width in the z-direction being 0.2mm, and **in that** the dwell time for each activated focus position is 200 to 2000 µsec.

9. The system as recited in Claims 1 through 8, **characterized in that** the fixed anode, which is composed of tungsten or gold, can be cooled with a coolant, such as water or oil.

10. The use of the system as recited in one or more of the preceding Claims 1 through 9 for examining containers, such as baggage items, parcels, bags, and the like, containing explosives, weapons, or drugs.

**Revendications**

1. Dispositif pour mesurer le spectre de transfert d'impulsion de quanta de rayons X diffusés élastiquement dans une zone d'évaluation pour des moyens de réception avec un dispositif de rayonnement X (Q) polychromatiques disposés sur un côté de la zone d'évaluation (U) et avec un dispositif de détection (D) mesurant l'énergie des quanta de rayons X diffusés sur l'autre côté de la zone d'évaluation ainsi qu'avec un dispositif d'élimination de rayons primaires (P) et un dispositif d'élimination de rayons secondaires (S) qui ne laissent passer que des rayons de diffusion à l'intérieur d'une zone d'angle de diffusion vers le détecteur dont 1 dispositi d'élimination de rayons primaires est disposée entre la zone d'évaluation et les rayons X (Q) et le dispositif d'élimination de rayons secondaires (S) entre la zone d'évaluation (U) et le dispositif de détection (D) et avec des moyens pour traiter les signaux mesurés, **caractérisé en ce que** le dispositif de détecteur (D1, ....Dn) se trouve sur l'axe z formant en même temps un axe de symétrie autour duquel le dispositif d'élimination de rayons secondaires (S) s'étend selon une symétrie cylindrique ; un point O se trouvant sur l'axe z qui détermine le point d'origine pour un système de coordonnées cartésiennes avec des axes x et y ; l'axe de transport pour le moyen de réception à évaluer s'étendant de façon parallèle par rapport à l'axe z et **caractérisé en ce que** le dispositif d'élimination de rayons primaires (P) ne laisse passer que des rayons X (Q) qui rencontre essentiellement le point O ; les rayons X (Q) étant disposés derrière le dispositif d'élimination de rayons primaires (P) avec une anode agrandie dont la position de foyer est susceptible d'être commandée sur la longueur de l'anode de façon électrique et le dispositif d'élimination de rayons primaires (P) et les rayons X (Q) s'étendant selon une symétrie cylindrique autour de l'axe de symétrie ou de façon linéaire, parallèlement à l'axe y dans le plan x,y.

2. Dispositif selon la revendication 1, **caractérisé en ce que** le dispositif de détection D est composée d'éléments (D1, ....Dn) qui détectent dans la zone d'évaluation, du rayonnement diffusé, **en ce que** deux dispositifs de détecteurs de rayonnements diffusé sont disposés avec des éléments D1, ...Dn de façon symétrique autour du point O, **en ce que** chaque dispositif comprend au moins 10 à maximum 50 éléments par côté composés dans un matériau semi-conducteur, comme le Ge, CaZnTe etc.

3. Dispositif selon la revendication 1 à 2, **caractérisé en ce qu'**au point O on trouve soit un détecteur D0 pour mesurer le rayonnement de passage ou un diaphragme à travers lequel, le rayonnement de passage est enregistré sur une ligne de détection sensible aux rayons X ; la ligne de détection étant composée d'une multitude (environ 512) d'éléments de détection et **en ce que** la ligne de détection est parallèle par rapport à l'axe y.

4. Dispositif selon la revendication 2, **caractérisé en ce que** chaque élément du dispositif de détection D comporte un moyen pour analyser le spectre des hauteurs d'impulsion.

5. Dispositif selon la revendication 1 à 4, **caractérisé en ce que** chaque élément présente une largeur dans la direction z de 0,5 à 2 mm et une longueur dans la direction y de 5 à 20 mm.

6. Dispositif selon la revendication 1 à 5, **caractérisé en ce que** la disposition d'élimination de rayons secondaires (S) est composée de plusieurs corps de collimateurs cylindriques dont l'un entoure l'autre de façon concentrique par rapport à l'axe de symétrie.

7. Dispositif selon la revendication 1 à 6, **caractérisé en ce que** la disposition d'élimination de rayons primaires est composée de plusieurs lamelles dans un matériau absorbant les rayons X comme le Cu; les lamelles se coupant dans l'axe z acceptent une divergence de rayon dans le plan x-y de 0,2 jusqu'à 0,6°, notamment 0,4°, et ayant une longueur dans la direction x située entre 100 et 300 mm et un angle maximal dans le plan x-y par rapport à l'axe x de +/- 20°.

8. Dispositif selon la revendication 1 à 7, **caractérisé en ce que** l'anode agrandie comporte une longueur dans la direction y de 1 à 2 m, notamment 1,5 m ; un rayon d'électrons ou les rayons X étant pourvu sur cette longueur de manière déviable d'une multitude de 30 à 50 cathodes différentes qui sont disposées l'une à côté de l'autre et sont susceptibles d'être mise en marche selon une motif de séquences ; la longueur de foyer sur l'anode s'élévant à 30 à 60 mm dans la direction y et une largeur de foyer effective dans la direction z de 0,2 mm et **en ce que** la durée de rétention s'élève pour chaque position de foyer mise en marche à 200 à 2000 μsec.

9. Dispositif selon la revendication 1 à 8, **caractérisé en ce que** l'anode fixe constituée de tungstine ou d'or peut être refroidie avec un liquide de refroidissement comme de l'eau ou de l'huile.

10. Utilisation du dispositif selon une des multiples revendications 1 à 9 pour examiner de l'explosif, des moyens de réception contenant des armes ou de la drogue, comme des valises , des paquets, des sacs et quelque chose de similaire.

Fig. 1

Primärkollimator          p

$Q_n$

Streuzylinder #1

$Q_i$                                    S

Streuzylinder #3         y Achse

$Q_0$                                    $D_0$

x Achse                              Detektor-
                    Abtastbereich    anordnung

Strahlungs-        Objektraum
quelle    Q                          Ablenkungs-
                                     winkel, α

Fig. 2

Primär-
Kollimator          p

$Q_n$

Streuzylinder #2      y Achse

$Q_i$                    S

$Q_0$

x Achse
                    Abtastbereich

Strahlungs-                      Detektorquelle             Lochblende    anordnung
        Q                L

Fig. 3

10

Tabelle 1

| Parameter | Wert | Bemerkung |
|---|---|---|
| $R_x$ | 2150mm | Radius des Fokus von O |
| $R_o$ | 1750 mm | Radius an der Oberseite des Objektbereichs relativ zu O |
| $R_T$ | 1100 mm | Radius am unteren Rand des Objektbereichs |
| $L_s$ | 550 mm | Fokus zur Oberseite der Tunnelabtrennung |
| $L_o$ | 605 mm | Maximale Kofferhöhe |
| $L_D$ | 1100 mm | Förderband zur Detektorabtrennung |
| $\theta$ | 0,0376 | Mittlerer Streuwinkel |
| $\alpha_{max}$ | ±20° | Maximaler Ablenkungswinkel |
| $B_y$ | 800 mm | Breite des Gepäckstücks in $Y$-Richtung |
| $B_x$ | 604 mm | Höhe des Gepäckstücks in $X$-Richtung |
| $F_z$ | 200 μm | Fokusgröße Z-Richtung |
| $\delta\gamma$ | 0,4° | Winkelbereich des Fächers |
| $Z_c$ | 41,4 mm | Abstand der Frontkante des Detektors von der Durchleuchtungsscheibe |
| $D_z$ | 24,4 mm | Detektorbreite |
| $D_Y$ | 10 mm | Detektorlänge |

11

Tabelle 2

| I | 1 | 2 | 3 | 4 | 5 | 6 | 7 | 8 | 9 | 10 | 11 | 12 | 13 | 14 |
|---|---|---|---|---|---|---|---|---|---|----|----|----|----|----|
| $Z_I$ | 42,7 | 44,5 | 46,2 | 48,0 | 49,8 | 51,5 | 53,3 | 55,0 | 56,8 | 58,6 | 60,4 | 62,1 | 63,9 | 65,6 |
| $Z_3$ | 20,9 | 20,9 | 24,4 | 24,4 | 24,4 | 24,4 | 28,0 | 28,0 | 27,1 | 27,1 | 30,6 | 30,6 | 34,1 | 34,1 |
| $R_I$ | 546 | 546 | 546 | 546 | 639 | 639 | 639 | 639 | 755 | 755 | 755 | 755 | 755 | 755 |